(19) Europäisches Patentamt
European Patent Office
Office européen des brevets

(11) **EP 3 247 521 B1**

## (12) EUROPEAN PATENT SPECIFICATION

(45) Date of publication and mention
of the grant of the patent:
**18.08.2021  Bulletin 2021/33**

(21) Application number: **16701410.9**

(22) Date of filing: **20.01.2016**

(51) Int Cl.:
*B23K 1/00* *(2006.01)*          *B23K 35/30* *(2006.01)*
*B23K 35/02* *(2006.01)*         *F28F 3/00* *(2006.01)*
*B01J 19/00* *(2006.01)*         *B23K 101/14* *(2006.01)*
*B23K 103/04* *(2006.01)*

(86) International application number:
**PCT/EP2016/000094**

(87) International publication number:
**WO 2016/116273 (28.07.2016 Gazette 2016/30)**

(54) **A HEAT EXCHANGER COMPRISING MICRO CHANNELS AND MANUFACTURING THEREOF**

WÄRMETAUSCHER MIT MIKROKANÄLEN UND HERSTELLUNG DAVON

ÉCHANGEUR DE CHALEUR COMPRENANT DES MICRO-CANAUX ET SA FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.01.2015  SE 1550046**

(43) Date of publication of application:
**29.11.2017  Bulletin 2017/48**

(73) Proprietor: **SWEP International AB
261 22 Landskrona (SE)**

(72) Inventors:
• **DAHLBERG, Tomas
254 50 Helsingborg (SE)**
• **BORNEGÅRD, Niclas
237 36 Bjärred (SE)**

(74) Representative: **Ström & Gulliksson AB
P.O. Box 4188
203 13 Malmö (SE)**

(56) References cited:
**US-A1- 2007 225 532     US-A1- 2009 250 379
US-B1- 6 656 292**

## Description

FIELD OF THE INVENTION

The present invention relates to a method for forming flow channels between two neighboring plates. The invention also relates to a brazed heat exchanger comprising such flow channels.

PRIOR ART

US2009/250379A1 discloses a method of forming flow channels according to the preamble of claim 1.

Micro channel heat exchangers, i.e. heat exchangers wherein the typical flow channel for at least one of the fluids to exchange heat is smaller than 1 mm, have some benefits over heat exchangers having ordinarily sized flow channels - for example, the volume of the media to exchange heat can be small in a micro channel heat exchanger, due to larger heat exchanging area as compared to the volume of the flow channels. Also, micro channels will promote a completely laminar flow in the channels, which gives a superior heat transfer.

The theory behind the efficiency of micro channels can be derived from the expression:

$$h = Nu_c \frac{k}{d}$$

Where $h$ is the heat transfer coefficient, $Nu_c$ is the Nusselt number, $k$ is the thermal conductivity of the fluid and $d$ is the hydraulic diameter of the channel or duct. In internal laminar flows, the Nusselt number becomes a constant. As Reynolds number is proportional to hydraulic diameter, fluid flow in channels of small hydraulic diameter will predominantly be laminar in character. This correlation therefore indicates that the heat transfer coefficient increases as channel diameter decreases. Should the hydraulic diameter in forced convection be on the order of tens or hundreds of micrometers, an extremely high heat transfer coefficient should result.

Until now, micro channels in heat exchangers have been manufactured by removing material from e.g. a heat exchanger plate by machining or some kind of etching, either chemical etching or by laser evaporation. These methods are, however, costly. Moreover, the chemical etching of plates requires hazardous chemicals, which pose a risk both for workers and the environment.

The present invention provides a method for producing micro channels without removal of material and a heat exchanger that comprises micro channels that have been manufactured without the removal of material.

SUMMARY OF THE INVENTION

The above manufacturing method comprises the steps of:

Applying brazing material having a melting range in a pattern corresponding to the desired flow channel pattern on either or both of plates to be provided with micro channels, the height of the pattern exceeding the height of the desired flow channel;
Arranging the plates on a distance from one another corresponding to the desired height of the flow channel;
Heating the plates and the applied brazing material to a temperature exceeding an initial melting point of the applied brazing material while being lower than a temperature at which the brazing material is completely melted; and
Allowing the plates and the brazing material to cool down.

In order to attain a heat exchanger being resistant to corrosion, the plates may be are manufactured from 316 stainless steel.

A brazing material suitable for joining the above plates of 316 stainless steel may comprise:

2-2.5% Mo,
13-13.5% Ni,
18-18.5% Cr,
7.5-8.5% Si,
5.1-5.5% Mn,
0.9-1.2% B,

all percentages given by weight and balance being Fe.

To be even more specific, the brazing material may comprise:

2.1% Mo,
13.4% Ni,
18,4% Cr,
8%Si,
5.3% Mn,
1.1% B,

All percentages given by weight and balance being Fe.

For the above brazing materials, the temperature exceeding the initial melting temperature while being lower than the temperature at which the brazing material is completely melted is 1125-1135 degrees C.

In order to achieve micro channels, a width of a flow channel may be 0.15 to 0.25 mm and its height about 0.1 to 0.2 mm.

In order to keep the distance between the plates at the desired value, dents having a height corresponding to the desired height and being arranged to contact the neighboring plate may be provided on either or both of the plates.

In order to facilitate application, the brazing material may provided as a paste comprising grains of brazing material, wherein the grain size is smaller than 50 $\mu$m.

In order to form a paste, the brazing material may also comprise a binder, wherein the brazing material/binder ratio may range from 90/10 to 94/6.

For the brazing materials as defined above, the temperature exceeding an initial melting point of the applied brazing material while being lower than a temperature at which the brazing material is completely melted may lie between first and second negative peaks of a DTA-TGA curve showing the endothermic behavior of the brazing material vs. temperature.

A cost efficient method of applying the brazing material may be screen printing.

Tests have shown the width of openings in a stencil used for the screen printing may 200 $\mu$m, wherein a thickness of the stencil corresponds roughly to the desired thickness of the applied brazing material.

In another embodiment of the invention, the brazing material may comprise a mix of metal powder comprising grains of first and second components, wherein one of the components has a lower melting point than the other component and wherein the brazing temperature is such that only the component having the lower melting point melts.

DESCRIPTION OF EMBODIMENTS

First, it should be noted that the term "brazing" is used throughout this description of embodiments. Brazing is defined as heating objects to be brazed with a brazing material being placed between the objects to be brazed and thereafter heat the objects to be brazed and the brazing material until the brazing material is completely melted. Thereafter, the temperature is lowered, such that the brazing material solidifies and binds the objects to be joined to one another.

Sintering is another process that is used to bind minute grains of metals to one another. In sintering processes, the grains are joined by a diffusion process at elevated temperature - the temperature is, however, lower than the melting temperature of the metal in the grains to be joined. A special type of sintering is "liquid-state sintering", meaning that some of the grains are made from a metal that melts at the elevated temperature, while the majority of the grains are made from a metal that does not melt.

In the following, the term "brazing" is meant to encompass any method of joining two metal objects to one another by adding a joining material having a lower melting point than the metal objects to be joined, although some of the methods disclosed below may be called "sinter brazing" and might be defined as a mixture between brazing and sintering - which will be disclosed later.

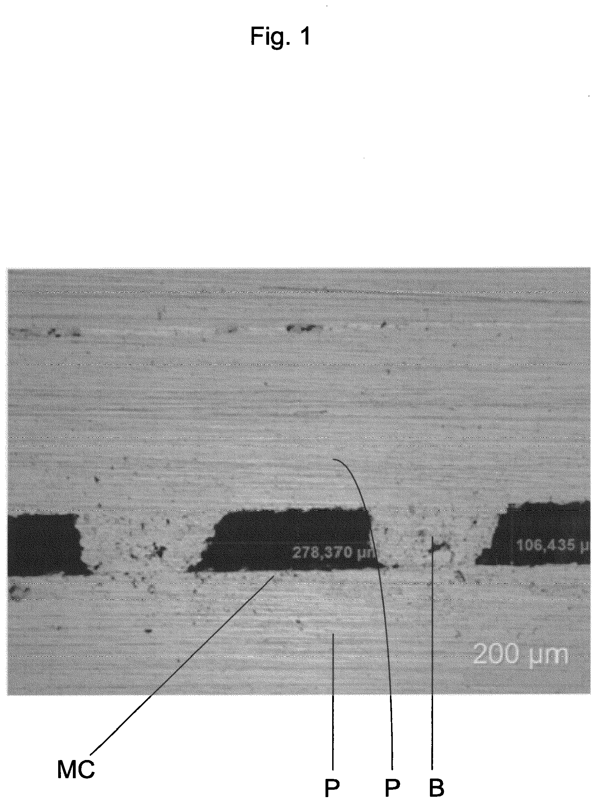

In Fig. 1, a micrograph shows micro channels MC provided between two plates P in cross section. The micro channels are on upper and lower sides limited by the plates P, and two micro channels are divided by a wall W comprising a string of a brazing material B. The brazing material and the application thereof will be more elaborated on below. In the shown example, the width of a micro channel MC is about 0.2 mm and the height about 0.1 mm. The wall W is about 0.15 mm wide and has the same height as the micro channel MC. It should be emphasized, however, that the width of the micro channel MC may be significantly wider than shown in Fig. 1. Having wider micro-channels MC is beneficial in many ways: First, the efficient heat exchanging area increases. Second, the ratio of "rough" surface of the brazing material vs. the "smooth" area of the plates becomes smaller, which will promote a more laminar flow and hence increase heat exchange. The drawback with wider micro channels MC compared to narrower micro channels MC is that the capability to withstand pressure will decrease.

The brazing material B is provided in strings on one of the plates P in a pattern corresponding to the desired shape of the micro channels. The provision of the brazing material strings may be made by any suitable method, but screen printing of the brazing material with a suitable stencil has proven to give the desired results. The height of the screen printed brazing material is preferably slightly larger than the desired height of the micro channel MC. Here, it deserves to be mentioned that the strings of brazing material may be applied in any pattern: If straight lines are used, the flow resistance may be minimized, but the "thermal length" will also be minimized. Also, straight lines will make the micro channels less pressure resistant, since the plates limiting the micro channels will be able to flex outwards upon being subjected to a pressure load.

If, however, the brazing material is applied in a reciprocating pattern, the capability to withstand an internal pressure will be significantly improved. A meandering pattern will give a beneficial flow resistance and a high capability to withstand an internal pressure; however, the flow resistance will be higher than for entirely straight channels.

After the brazing material has been applied to one or both of the plates P, the plates are positioned on top of one another and placed in a brazing furnace to be brazed together. Optionally, in order to secure that the distance between the plates, i.e. the height of the micro channels MC, is kept at the desired value, either or both of the plates may be provided with dents having a height corresponding to the desired height and being arranged to contact the neighboring plate. Alternatively, the distance between the plates may be kept in another way, e.g. by placing any kind of objects between the plates in order to keep the plates on the desired distance from one another. Due to the height of the brazing material being slightly higher than the desired height of the micro channel MC, the applied brazing material will contact both plates, and the applied brazing material will also be slightly compressed. In one embodiment of the invention, described later, both plate surfaces are covered with brazing material prior to the positioning of the plates on top of one another.

The brazing material shall preferably be of the type that has a melting interval

- one example of a suitable brazing material is an iron based brazing material comprising:

      2-2.5% Mo,
      13-13.5% Ni,
      18-18.5% Cr,
      7.5-8.5% Si,
      5.1-5.5% Mn,
      0.9-1.2% B,
      All percentages given by weight,
      Balance being Fe,

   wherein the preferred percentages of the above constituents are:

      2.1% Mo,
      13.4% Ni,
      18,4% Cr,
      8 %Si,
      5.3% Mn,
      1.1% B,
      All percentages given by weight,
      Balance being iron.

The liquidus temperature of the preferred brazing material is 1196 degrees C, whereas the solidus temperature is 1110 degrees C.

The brazing material is provided in a paste comprising grains of brazing material, wherein the grain size is smaller than 50 $\mu$m, the brazing material/binder ratio ranges from 90/10 to 94/6 and the viscosity of the paste ranges from 650-900 PaS, wherein the preferred grain size is 45 $\mu$m, the preferred brazing material/binder ratio is 92/8 and the preferred viscosity range is 800-850 PaS.

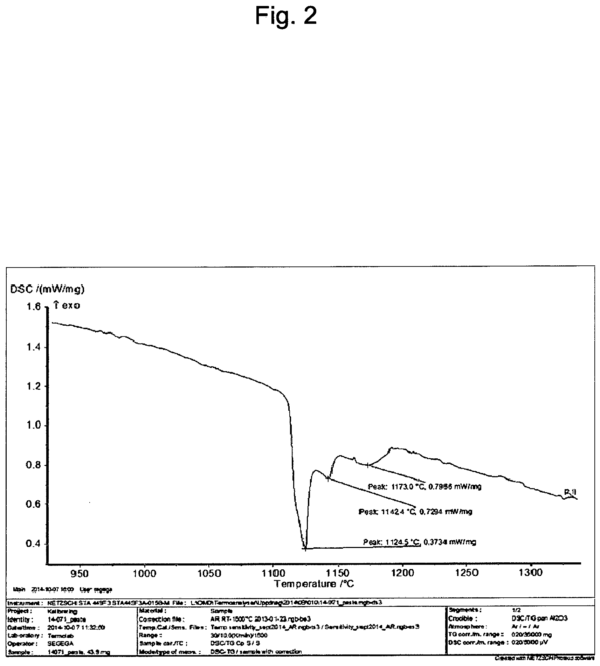

In Fig. 2, a so-called DTA-TGA curve of the above brazing material is shown. As can be seen, there is a fist negative peak at 1124.5 degrees C, a second negative peak at 1142 degrees C and a third negative peak at 1173 degrees C. This can be interpreted such that the melting of the brazing material starts at slightly below 1124 degrees C, while the brazing material is completely melted above 1173 degrees. For ordinary brazing, it is desired to heat the brazing material and the articles to be brazed to a temperature where the brazing material is completely melted.

According to the invention, however, the maximum brazing temperature is kept just slightly above the first negative peak, i.e. such that the brazing material is only partly melted. Surprisingly, this temperature is sufficient to achieve a bond between the brazing material and the plates.

Two different brazing temperatures have been evaluated, 1130 degrees C and 1160 degrees C. The results indicate that the strings of brazing material tend to "collapse" at the higher brazing temperatures, probably due to the brazing material "floating", such that the integrity of the applied strings of brazing material is compromised. However, at 1130 degrees C, just above the first negative peak of the DTA-TGA curve, the integrity of the strings of brazing material is not compromised, while the bonding to the plates is sufficient.

Another method for joining the plates comprises two steps: In a first step, the brazing material is provided in the desired pattern on either of the plates, after which the plate is heated to a temperature slightly above the first negative peak of the DTA-TGA curve, e.g. 1130 degrees C, after which the plate and brazing material is allowed to cool down. Thereafter, the other plate is provided on top of the brazing material, and the entire assembly comprising first and second plates are brazed at a temperature exceeding the first brazing temperature, e.g. 1160 degrees C. Initial tests have shown that the result is not as good as for the method wherein the second plate is provided on a "wet" brazing material, i.e. when the brazing is performed in one step. One possible explanation may be that the Mn will evaporate and the melt depressants Si and B be consumed during the first heating step, which increases the melting temperature and hence decreases the wetting properties of the brazing material.

As mentioned above, the brazing material may be in the form of a paste and be applied by e.g. screen printing, an application method wherein a "stencil" is provided with openings in a pattern corresponding to the desired pattern of the brazing material. In order to apply the brazing material, the stencil is press towards the surface to be supplied with the brazing material. Brazing material paste is applied to the opposite side of the stencil, whereupon it will pass the openings and attach to the surface to be coated. When the stencil is removed, the brazing material paste will remain on the coated surface

As could be understood, the grains of the brazing material paste must be smaller than the width of the opening of the stencil. In the present case, the grain size of the brazing material is 45 $\mu$m, whereas the width of the opening is 200 $\mu$m. The thickness of the stencil corresponds roughly to the desired thickness of the applied brazing material, which, as mentioned, shall be somewhat higher than the desired height of the micro channel MC.

It should be noted that the brazing material does not melt completely - therefore, there will be some porosities in the brazing material after the heating operation, due to out gassing of binder necessary to form the paste. However, the fact that the walls W formed by the brazing material may not be completely free from porosities is not a problem - even if the porosities would lead to leakage between neighboring micro channels, this is not detrimental, provided that the same type of fluid to undergo heat exchange is present in neighboring channels, which is mostly the case.

Concerning the stencil, it was difficult to manufacture a stencil with openings having a width smaller than 0.25 mm and a correspondingly large distance between the openings. However, according to the invention, the brazing material may be applied by any method. One method that has been considered is 3D-printing, i.e. provide the brazing material in thin consecutive layers and selectively expose the layers to laser radiation where it is desired that the layers of brazing material shall stick to the plate to be provided with the brazing material or brazing material that has already stuck to the plate to be provided with brazing material.

In one embodiment of the invention, the brazing material is coated onto both surfaces to be joined. Tests have namely shown that the brazing material is more prone to fasten to the surface that has been coated, while the connection to the plate that is pressed towards the brazing material coated on the opposing plate is somewhat less prone to be firmly connected to the brazing material. By coating both plates and then pressing the brazing material coated on one plate to brazing material coated on the opposite plate, a firm connection to both plates can be achieved.

According to the disclosed embodiments of the inventions, an iron based brazing material has been used. There is, however nothing that excludes other brazing materials to be used - it is, however, required that the brazing material does not melt completely, i.e. that it has a melting interval, or contains grains of a material that does not melt. One possible way of achieving this is to blend a powder comprising grains of first and second components, wherein one of the components has a lower melting point than the other component and wherein the brazing temperature is such that only the component having the lower melting point melts. Then, the grains of the component having the higher melting temperature will provide integrity to the brazing material during the brazing operation, while the component having the lower melting temperature will melt and fill the gaps between the grains of the component having the higher melting point. In many respects, this is a form of liquid-state sintering.

If a brazing material comprising grains having different melting temperatures is used, it is possible to select the grain size such that the maximum grain size corresponds to the desired thickness of the plates. In this embodiment of the invention, the grains having the higher melting point may e.g. be made from stainless steel, and the grains having the lower melting point may be e.g. a stainless steel provided with liquidus lowering additions of Si, B, Mn and/or P.

The object to be brazed may be sheet metal manufactured from 316 stainless steel and having a thickness of 0.1 - 0.8 mm, preferably 0.2 - 0.4 mm.

Moreover, the brazing operation, according to all methods disclosed above may be performed under a vacuum, a protective, i.e. inert, gas, or a so-called "endothermic gas", i.e. a gas able to reduce any oxide layer on the grains of the brazing material or the material to be brazed. A common example of an endothermic gas is hydrogen, $H_2$, which at high temperature may reduce metal oxide to the metal and water, $H_2O$, which will be in gas phase at the elevated temperatures.

## Claims

1. Method for forming flow channels (MC) between two neighboring plates (P), **characterized by** the steps of:

   Applying brazing material (B) having a melting point range in a pattern corresponding to the desired flow channel pattern on either or both of the plates (P), the height of the pattern exceeding the height of the desired flow channel;
   Arranging the plates on a distance from one another corresponding to the desired height of the flow channel (MC);
   Heating the plates and the applied brazing material to a temperature exceeding an initial melting point of the applied brazing material while being lower than a temperature at which the brazing material is completely melted; and
   Allowing the plates and the brazing material to cool down.

2. The method of claim 1, wherein the plates (p) are manufactured from 316 stainless steel.

3. The method of claim 1 or 2, wherein the brazing material comprises:

   2-2.5 % Mo,
   13-13.5 % Ni,
   18-18.5% Cr,
   7.5-8.5 % Si
   5.1-5.5% Mn,
   0.9-1.2% B,

   all percentages given by weight and balance being Fe.

4. The method of claim 3, wherein the brazing material comprises:

   2.1 % Mo,
   13.4 % Ni,
   18,4 % Cr,
   8 % Si,
   5.3 % Mn,
   1.1% B,

   All percentages given by weight and balance being iron.

5. The method according to claim 1 or 2, wherein the brazing material comprises a blend of cooper and stainless steel grains.

**6.** The method of claim 5, wherein the stainless steel grains have a grit size corresponding to the desired height of the flow channels (MC).

**7.** The method according to any of claims 1-4, wherein the temperature exceeding the initial melting temperature while being lower than the temperature at which the brazing material is completely melted is 1125-1135 degrees C.

**8.** The method of any of the preceding claims, wherein a width of a flow channel MC is 0.15 to 0.25 mm and its height about 0.1 to 0.2 mm.

**9.** The method of any of the claims, wherein the distance between the plates, i.e. the height of the flow channels (MC), is kept at the desired value, by dents having a height corresponding to the desired height and being arranged to contact the neighboring plate.

**10.** The method of any of the preceding claims, wherein the brazing material is provided as a paste comprising grains of brazing material, wherein the grain size ranges from 40 to 50 $\mu$m.

**11.** The method of claim 8, wherein the brazing material also comprises a binder, wherein the brazing material/binder ratio ranges from 90/10 to 94/6

**12.** The method of any of the preceding claims, wherein the temperature exceeding an initial melting point of the applied brazing material while being lower than a temperature at which the brazing material is completely melted lies between first and second negative peaks of a DTA-TGA curve showing the endothermic behavior of the brazing material vs. temperature.

**13.** The method of any of the preceding claims, wherein the brazing material is applied by screen printing.

**14.** The method of claim 11, wherein the width of openings in a stencil used for the screen printing is 200 $\mu$m and a thickness of the stencil corresponds roughly to the desired thickness of the applied brazing material.

**15.** The method of claims 1, 2, 5 and 7, wherein the brazing material comprises a mix of metal powder comprising grains of first and second components, wherein one of the components has a lower melting point than the other component and wherein the brazing temperature is such that only the component having the lower melting point melts.

**Patentansprüche**

**1.** Verfahren zur Bildung von Strömungskanälen (MC) zwischen zwei benachbarten Platten (P), das durch die folgenden Schritte gekennzeichnet ist:

Aufbringen von Lötmaterial (B) mit einem Schmelzpunktbereich in einem Muster, das dem gewünschten Strömungskanalmuster entspricht, auf eine oder beide der Platten (P), wobei die Höhe des Musters die Höhe des gewünschten Strömungskanals übersteigt;
Anordnen der Platten in einem Abstand zueinander, der der gewünschten Höhe des Strömungskanals (MC) entspricht;
Erhitzen der Platten und des aufgebrachten Lötmaterials auf eine Temperatur, die einen Anfangsschmelzpunkt des aufgebrachten Lötmaterials übersteigt, aber niedriger ist als eine Temperatur, bei der das Lötmaterial vollständig geschmolzen ist; und
Abkühlen lassen der Platten und des Lötmaterials.

**2.** Verfahren nach Anspruch 1, wobei die Platten (P) aus Edelstahl 316 hergestellt sind.

**3.** Verfahren nach Anspruch 1 oder 2, wobei das Lötmaterial umfasst:

2-2,5 % Mo,
13-13,5 % Ni,
18-18,5 % Cr,
7,5-8,5 % Si
5,1-5,5 % Mn,
0,9-1,2 % B,

wobei sich alle Prozentangaben auf das Gewicht beziehen und der Rest Eisen ist.

**4.** Verfahren nach Anspruch 3, wobei das Lötmaterial umfasst:

2,1 % Mo,
13,4 % Ni,
18,4 % Cr,
8 % Si
5,3 % Mn,
1,1 % B,

Alle Prozentangaben beziehen sich auf das Gewicht und der Rest ist Eisen.

**5.** Verfahren nach Anspruch 1 oder 2, wobei das Lötmaterial eine Mischung aus Kupfer- und Edelstahlkörnern umfasst.

**6.** Verfahren nach Anspruch 5, wobei die Edelstahlkörner eine Korngröße aufweisen, die der gewünschten Höhe der Strömungskanäle (MC) entspricht.

**7.** Verfahren nach einem der Ansprüche 1-4, wobei die Temperatur, die die Anfangsschmelztemperatur übersteigt, aber niedriger ist als die Temperatur, bei der das Lötmaterial vollständig geschmolzen ist, 1.125-1.135 Grad C beträgt.

**8.** Verfahren nach einem der vorhergehenden Ansprüche, wobei die Breite eines Strömungskanals MC 0,15 bis 0,25 mm und seine Höhe etwa 0,1 bis 0,2 mm beträgt.

**9.** Verfahren nach einem der Ansprüche, wobei der Abstand zwischen den Platten, d. h. die Höhe der Strömungskanäle (MC), auf dem gewünschten Wert gehalten wird, durch Beulen, die eine Höhe aufweisen, die der gewünschten Höhe entspricht, und die so angeordnet sind, dass sie die benachbarte Platte berühren.

**10.** Verfahren nach einem der vorhergehenden Ansprüche, wobei das Lötmaterial als eine Paste bereitgestellt wird, die Körner von Lötmaterial umfasst, wobei die Korngröße im Bereich von 40 bis 50 $\mu$m liegt.

**11.** Verfahren nach Anspruch 8, wobei das Lötmaterial auch ein Bindemittel umfasst, wobei das Verhältnis Lötmaterial/Bindemittel im Bereich von 90/10 bis 94/6 liegt.

**12.** Verfahren nach einem der vorhergehenden Ansprüche, wobei die Temperatur, die einen Anfangsschmelzpunkt des aufgebrachten Lötmaterials übersteigt, aber niedriger ist als eine Temperatur, bei der das Lötmaterial vollständig geschmolzen ist, zwischen einem ersten und einem zweiten negativen Peak einer DTA-TGA-Kurve liegt, die das endotherme Verhalten des Lötmaterials in Abhängigkeit von der Temperatur zeigt.

**13.** Verfahren nach einem der vorhergehenden Ansprüche, wobei das Lötmaterial durch Siebdruck aufgebracht wird.

**14.** Verfahren nach Anspruch 11, wobei die Breite der Öffnungen in einer Schablone, die für den Siebdruck verwendet wird, 200 $\mu$m beträgt und eine Dicke der Schablone in etwa der gewünschten Dicke des aufgebrachten Lötmaterials entspricht.

**15.** Verfahren nach Anspruch 1, 2, 5 und 7, wobei das Lötmaterial eine Mischung aus Metallpulver umfasst, die Körner einer ersten und einer zweiten Komponente umfasst, wobei eine der Komponenten einen niedrigeren Schmelzpunkt als die andere Komponente aufweist, und wobei die Löttemperatur so ist, dass nur die Komponente mit dem niedrigeren Schmelzpunkt schmilzt.

**Revendications**

**1.** Procédé pour former des canaux d'écoulement (MC) entre deux plaques voisines (P), **caractérisé par** les étapes suivantes :

Appliquer un matériau de brasage (B) ayant une plage de points de fusion dans un motif correspondant au motif de canal d'écoulement souhaité sur l'une ou l'autre des plaques (P) ou sur les deux, la hauteur du motif dépassant la hauteur du canal d'écoulement souhaité ;
disposer les plaques à une distance l'une de l'autre correspondant à la hauteur souhaitée du canal d'écoulement (MC) ;
chauffer les plaques et le matériau de brasage appliqué à une température supérieure à un point de fusion initial du matériau de brasage appliqué tout en étant inférieur à une température à laquelle le matériau de brasage est complètement fondu ; et
laisser refroidir les plaques et le matériau de brasage.

**2.** Procédé de la revendication 1, dans lequel les plaques (P) sont fabriquées à partir d'acier inoxydable 316.

**3.** Procédé de la revendication 1 ou 2, dans lequel le matériau de brasage comprend :

2-2,5 % de Mo,
13-13,5 % de Ni,
18-18,5 % de Cr,
7,5-8,5 % de Si
5,1-5,5 % de Mn,
0,9-1,2% B,

tous les pourcentages étant donnés en poids et le solde étant Fe.

**4.** Procédé de la revendication 3, dans lequel le matériau de brasage comprend :

2,1 % de Mo,
13,4 % de Ni,
18,4 % de Cr,
8 % de Si,
5,3 % de Mn,
1,1 % B,

tous les pourcentages sont donnés en poids, le reste étant du fer.

**5.** Procédé selon la revendication 1 ou 2, dans lequel le matériau de brasage comprend un mélange de grains de cuivre et d'acier inoxydable.

**6.** Procédé selon la revendication 5, dans lequel les grains d'acier inoxydable ont une granulométrie correspondant à la hauteur souhaitée des canaux d'écoulement (MC).

**7.** Le procédé selon l'une quelconque des revendications 1 à 4, dans lequel la température dépassant la température de fusion initiale tout en étant inférieure à la température à laquelle le matériau de brasage est complètement fondu est de 1125 à 1135 degrés C.

**8.** Le procédé selon l'une quelconque des revendications précédentes, dans lequel une largeur d'un canal d'écoulement MC est de 0,15 à 0,25 mm et sa hauteur d'environ 0,1 à 0,2 mm.

**9.** Procédé de l'une quelconque des revendications, dans lequel la distance entre les plaques, c'est-à-dire la hauteur des canaux d'écoulement (MC), est maintenue à la valeur souhaitée, par des bosses ayant une hauteur correspondant à la hauteur souhaitée et étant disposées pour être en contact avec la plaque voisine.

**10.** Procédé de l'une quelconque des revendications précédentes, dans lequel le matériau de brasage est fourni sous la forme d'une pâte comprenant des grains de matériau de brasage, la taille des grains étant comprise entre 40 et 50 $\mu$m.

**11.** Le procédé de la revendication 8, dans lequel le matériau de brasage comprend également un liant, dans lequel le rapport matériau de brasage/liant est compris entre 90/10 et 94/6.

**12.** Le procédé de l'une quelconque des revendications précédentes, dans lequel la température dépassant un point de fusion initial du matériau de brasage appliqué tout en étant inférieure à une température à laquelle le matériau de brasage est complètement fondu se situe entre les premier et deuxième pics négatifs d'une courbe DTA-TGA montrant le comportement endothermique du matériau de brasage en fonction de la température.

**13.** Procédé de l'une quelconque des revendications précédentes, dans lequel le matériau de brasage est appliqué par sérigraphie.

**14.** Procédé de la revendication 11, dans lequel la largeur des ouvertures dans un pochoir utilisé pour la sérigraphie est de 200 $\mu$m et une épaisseur du pochoir correspond approximativement à l'épaisseur souhaitée du matériau de brasage appliqué.

**15.** Procédé des revendications 1, 2, 5 et 7, dans lequel le matériau de brasage comprend un mélange de poudre métallique comprenant des grains d'un premier et d'un deuxième composants, dans lequel l'un des composants a un point de fusion inférieur à celui de l'autre composant et dans lequel la température de brasage est telle que seuls les grains du premier et du deuxième composants sont mélangés.

Fig. 1

MC             P   P   B

# Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009250379 A1